# FASCICULE DE BREVET EUROPEEN

(11) **EP 2 252 474 B1**
(45) Date de publication et mention de la délivrance du brevet: **23.05.2012**
(21) Numéro de dépôt: 09721419.1
(22) Date de dépôt: 10.03.2009
(51) Int. Cl.: B60J 5/00, B62D 25/10, B62D 65/06

(54) **ENSEMBLE D'UN PANNEAU D'OUVRANT ET D'ELEMENTS DE RENFORT**
ANORDNUNG AUS EINER ÖFFNUNGSPLATTE UND VERSTÄRKUNGSELEMENTEN
ASSEMBLY CONSISTING OF AN OPENING PANEL AND REINFORCING ELEMENTS

(30) Priorité: 10.03.2008 FR 0851533; 19.03.2008 FR 0851783
(43) Date de publication de la demande: 24.11.2010
(73) Titulaire: Compagnie Plastic Omnium, 69007 Lyon (FR)
(72) Inventeur: BARRAL, Denis, F-38390 Montalieu Vercieu (FR); FILLON, Jérôme, F-43000 Le Puy En Velay (FR)
(74) Mandataire: Remy, Vincent Noel Paul
(86) Numéro de dépôt international: PCT/FR2009/050396
(87) Numéro de publication internationale: WO 2009/115763

(56) Documents cités:
- EP-A- 1 327 545
- EP-A- 1 652 755
- DE-A1- 19 728 546
- US-A1- 2003 189 357

## Description

La présente invention concerne le domaine technique des ouvrants de véhicule automobile, notamment des hayons, des portes de coffre, des portières ou des capots de véhicule automobile.

On connaît, dans l'état de la technique, un ouvrant constitué par un hayon comprenant au moins un panneau intérieur de hayon relié à un cadre de rigidification suivant la forme du panneau de hayon, au voisinage de la bordure de celui-ci car ce cadre suit la piste d'étanchéité entre la caisse et le hayon. Un tel cadre est constitué par un tube métallique rapporté sur le panneau de hayon une fois formé.

Dans le cas d'un ouvrant, par exemple d'un hayon, conformé en trois dimensions, ce cadre, puisqu'il suit le contour du panneau de l'ouvrant, est également conformé en trois dimensions. Le cadre est alors formé par un ou plusieurs profilés mis en forme par un procédé complexe, tel que le stretch bending, puis soudés. Le stretch bending est un procédé lors duquel les profilés du cadre sont conformés en trois dimensions pour suivre la forme du panneau d'ouvrant tout en étant toujours sollicités en traction pendant leur conformation. Un tel procédé permet d'éviter que les profilés formant le cadre ne s'aplatissent ou ne s'écrasent à l'endroit où le cadre est plié. La fabrication du cadre par un tel procédé génère toutefois des coûts importants.

En outre, le cadre déjà formé doit être transporté et stocké avant l'assemblage avec le panneau de l'ouvrant. Or, du fait de sa forme complexe, ils est relativement encombrants et engendre de ce fait des coûts logistiques importants pour son transport ou son stockage.

Il est connu, du document EP 1 652 755 A1, un ouvrant de véhicule automobile tel que défini dans le préambule de la revendication 1, comprenant un panneau sur lequel sont agencés des éléments de renforts et des éléments de connexion, de telle manière que ceux-ci forment un cadre continu.

L'invention a pour but de fournir un ouvrant comportant un cadre de rigidification, de fabrication bon marché.

Ainsi, l'invention a pour objet un ensemble d'un panneau d'ouvrant de véhicule automobile et d'au moins deux éléments de renfort conforme à la revendication 1

Par « au moins partiellement superposée », on entend que chaque extrémité d'un élément de renfort est en superposition avec une partie d'un élément de connexion. Du fait de cette superposition, les contraintes subies par un élément de renfort sont transmises à l'élément de renfort adjacent par l'élément de connexion qui les relie.

Par « cadre continu », on entend que le cadre n'est pas interrompu, c'est-à-dire qu'il n'y a pas d'espace libre entre deux éléments de renfort et/ou de connexion contigus, de telle sorte que l'apport de rigidité du cadre au panneau est continu. La liaison entre un élément de connexion et un élément de renfort n'est pas considérée comme une discontinuité, les éléments de renfort et de connexion étant superposés.

L'ensemble selon l'invention permet ainsi de former un cadre de rigidification renforçant le panneau de façon satisfaisante. Le cadre est en particulier formé par les éléments de renforts liés entre eux par les éléments de connexion du panneau. Chaque élément de renfort à rapporter sur le panneau et participant à la formation du cadre peut donc être de forme simple, plus facile à fabriquer, transporter et stocker, car les éléments de connexion forment les parties du cadre de forme complexe, correspondant notamment aux changements de direction de la normale à la surface du panneau de l'ouvrant. Ainsi, les coûts liés à la fabrication de l'ouvrant sont diminués.

L'ensemble selon l'invention peut également comprendre l'une ou plusieurs des caractéristiques de la liste suivante :
- les éléments de connexion sont venus de moulage avec le panneau, ce qui assure une meilleure rigidité et une meilleure répartition des contraintes dans le hayon. La liaison des éléments de connexion et du panneau étant meilleure, la tenue de l'ouvrant dans le temps est également améliorée,
- le cadre continu longe la bordure du panneau de l'ouvrant, de façon à se trouver au plus près de la piste d'étanchéité,
- le ou les cadres continus formés à l'aide des éléments de connexion et de renfort sont les seuls cadres rigides de l'ouvrant et sont donc aptes à assurer à eux seuls la rigidification de celui-ci. Cela permet d'éviter des coûts de fabrication supplémentaires qui seraient liés à la fabrication et éventuellement l'assemblage d'éventuels autres moyens de renfort que les éléments formant les cadres,
- au moins un des éléments de renfort s'étend le long d'au moins deux segments sensiblement rectilignes formant partiellement le contour d'au moins un des cadres lorsque les éléments de renfort sont liés au panneau, tous les segments étant compris dans un unique plan. De cette façon, le procédé de fabrication des éléments de renfort est encore largement simplifié. Un cintrage suffit en effet pour former un élément de renfort galbé et ayant un profil non rectiligne tout en ayant une rigidité satisfaisante. Cela permet donc d'utiliser un procédé simple pour la fabrication de l'élément et de diminuer les coûts de fabrication de l'ouvrant par rapport à un ouvrant de l'état de la technique. En outre, de tels éléments de renforts permettent d'obtenir une rigidité très satisfaisante en regard du poids de l'ouvrant,
- au moins un des éléments de renfort s'étend selon le long d'un segment sensiblement rectiligne formant partiellement le contour d'au moins un des cadres lorsque les éléments de renfort sont liés au panneau. Les coûts de fabrication des éléments de renfort sont encore diminués puisque qu'aucune opération de conformation des éléments de renfort n'est nécessaire,
- au moins un des éléments de renfort est formé par un profilé à section constante, notamment un profilé à section ouverte, par exemple à section en U, dont la concavité est tournée vers le panneau de l'ouvrant,
- au moins un des éléments de connexion s'étend le long d'au moins deux segments sensiblement rectilignes formant chacun partiellement le contour d'au moins un des cadres lorsque les éléments de renfort sont liés au panneau, les segments n'étant pas parallèles entre eux. En particulier, l'élément de connexion s'étend le long d'au moins trois segments, n'appartenant pas à un unique plan. De tels éléments de connexion permettent de prendre en compte les changements de direction de la normale à la surface du panneau sans l'aide d'éléments extérieurs qu'il faudrait conformer et sont de ce fait très avantageux,
- au moins un élément de connexion est formé par un réseau de nervures,
- le panneau est réalisé en matière plastique, notamment en un matériau thermoplastique tel que le polypropylène, éventuellement chargé ou renforcé de fibres. Ainsi, le cadre de rigidification permet d'obtenir un ouvrant suffisamment rigide pour qu'on puisse utiliser un panneau non renforcé, réalisé en un matériau tel que le polypropylène. Il est en effet avantageux d'utiliser un panneau en un tel matériau car une bonne finition de surface est plus facile et moins coûteuse à obtenir avec ce matériau, du fait de l'absence de fibres de renfort. Le panneau peut alors être un panneau intérieur, notamment de hayon ou de portière, servant de garniture visible depuis l'intérieur du véhicule,
- au moins un des éléments de renfort est réalisé en un matériau métallique, par exemple en aluminium ou en acier, qui permet de rigidifier de façon satisfaisante le panneau sans pour autant augmenter considérablement le poids de l'ouvrant. Il est également envisageable que les éléments de renfort soient réalisés en matière plastique, notamment en matière thermodurcissable, par exemple en SMC ou en AMC (acronyme anglais de Advanced Moulding Compound), ou en matière thermoplastique,
- au moins un élément de renfort est apte à être lié au panneau par surmoulage. Dans ce cas, le panneau n'est pas une pièce déjà formée sur laquelle est rapporté au moins un élément de renfort mais est constitué par la matière plastique moulée sur les profilés. La liaison entre le panneau et les éléments de renfort est alors plus stable. Dans ce cas, il est avantageux qu'au moins un des éléments de renfort présente une section de concavité tournée vers la peau et de forme complexe, pour favoriser l'accroche mécanique de la matière plastique sur l'élément de renfort,
- au moins un élément de renfort est rapporté sur le panneau et est lié à ce panneau de sorte que chaque extrémité des éléments de renfort est emboîtée sur l'un des éléments de connexion,
- au moins un des éléments de renfort est fixé sur le panneau, notamment sur un élément de connexion, par vissage, rivetage (ou bouterollage), clippage (également désigné encliquetage) ou collage,
- le panneau comprend au moins une butée agencée pour coopérer avec un élément de renfort. Une telle butée est ménagée sur le panneau notamment lorsque les éléments de renfort sont destinés à être rapportés sur le panneau. Elle permet d'effectuer plus facilement le positionnement de l'élément de renfort relativement au panneau et également d'éviter un déplacement non souhaité de l'élément de renfort relativement au panneau, lorsque l'ouvrant est en fonctionnement. Cet élément peut en effet alors être sollicité par exemple en torsion,
- au moins un élément de connexion du panneau est apte à porter un élément fonctionnel de l'ouvrant, tel qu'une serrure. Dans ce cas, l'élément de connexion peut ne pas seulement être agencé au niveau des changements de direction du panneau mais peut constituer un côté entier du cadre, par exemple un côté inférieur de celui-ci,

Le panneau d'ouvrant peut être apte à former un panneau de hayon, de porte de coffre, de portière ou de capot de véhicule automobile. Dans le cas d'un hayon ou d'une portière, le panneau peut appartenir au caisson du hayon ou de la portière et constituer par exemple le panneau intérieur de cet ouvrant. Dans le cas du capot, le panneau peut être une peau ou une doublure du capot.

Il est également envisageable qu'une structure comprenant un panneau avec des éléments de connexion, associée à des éléments de renfort soit appliquée à d'autres parties d'un véhicule automobile, par exemple à une structure de toit de ce véhicule. L'invention a également pour objet un panneau d'ouvrant appartenant à un ensemble selon l'une quelconque des revendications précédentes.

L'invention sera mieux comprise à la lecture de la description qui va suivre, donnée uniquement à titre d'exemple et faite en se référant aux dessins dans lesquels :
- la figure 1 est une vue en perspective d'un ensemble selon un premier mode de réalisation particulier de l'invention,
- la figure 2 est une vue en perspective d'un panneau de l'ensemble de la figure 1,
- la figure 3 est une vue en perspective d'un détail d'un ensemble selon une variante du premier mode de réalisation de l'invention, lorsque les différents éléments de l'ensemble sont assemblés,
- la figure 4 est une vue en coupe d'un ensemble selon un deuxième mode de réalisation de l'invention,
- la figure 5 est une vue en perspective d'éléments de renforts appartenant à un ensemble selon un troisième mode de réalisation de l'invention.

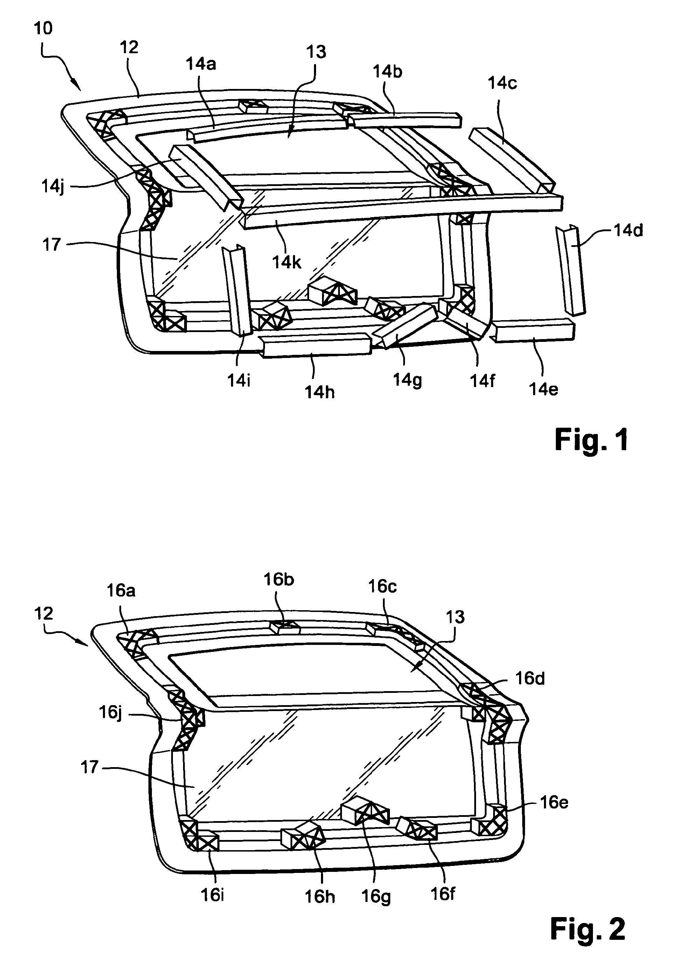

On voit sur la figure 1 un ensemble 10 selon un premier mode de réalisation de l'invention, comportant un panneau intérieur de hayon 12 appartenant au caisson du hayon et des éléments de renfort 14a à 14k.

Le panneau de hayon 12 est réalisée en matière plastique, notamment en polypropylène (PP) et comprend en partie supérieure une ouverture 13. Chaque élément de renfort est formé par un profilé en U métallique et réalisé en particulier en aluminium. Chaque profilé en U est de forme allongée et sensiblement rectiligne.

Comme on le voit plus particulièrement sur la figure 2, le panneau comprend des éléments de connexion 16a à 16j venus de moulage avec le panneau et constitués chacun par un réseau de nervures, les nervures étant conformées en saillie d'une partie sensiblement plane 17 du panneau fermant la caisse du véhicule à l'arrière de celui-ci.

Chaque élément de renfort 14a à 14k est apte à être monté sur le panneau entre deux éléments de connexion, dans une position dans laquelle la concavité du profilé est tournée vers le panneau 12. Chaque extrémité des éléments de renfort s'emboîte sur un élément de connexion du panneau. Par exemple, l'élément de renfort 14a est destiné à être placé entre les éléments de connexion 16a et 16b, chaque extrémité de l'élément de renfort s'emboîtant sur un élément de connexion 16a ou 16b.

Lorsque les éléments de renfort 14a à 14k sont positionnés entre les éléments de connexion appropriés, les éléments de renfort et les éléments de connexion forment plusieurs cadres continus permettant de renforcer le hayon. Les éléments de renfort et le panneau forment notamment un premier cadre continu qui longe la bordure du panneau de hayon, ainsi qu'un cadre inférieur continu dont l'extrémité inférieure et les deux montants latéraux appartiennent au premier cadre et dont l'extrémité supérieure est formée par l'élément de renfort 14k et un cadre supérieur continu dont l'extrémité supérieure et les deux montants latéraux appartiennent au premier cadre et dont l'extrémité inférieure est formée par l'élément de renfort 14k. Ces cadres forment les seuls cadres rigides du hayon et sont aptes à renforcer celui-ci de façon satisfaisante.

Ils permettent de former un hayon ayant une rigidité satisfaisante et de fabrication peu coûteuse. En effet, les éléments de renfort ont une forme simple puisqu'ils sont sensiblement rectilignes. Ils sont de ce fait faciles à fabriquer, à transporter et à stocker. Le cadre peut suivre la forme en trois dimensions du panneau grâce aux éléments de connexion, qui sont placés à chaque changement de direction de la normale à la surface du panneau du hayon de sorte que les éléments de renfort constituent le cadre dans les parties sensiblement planes de celui-ci.

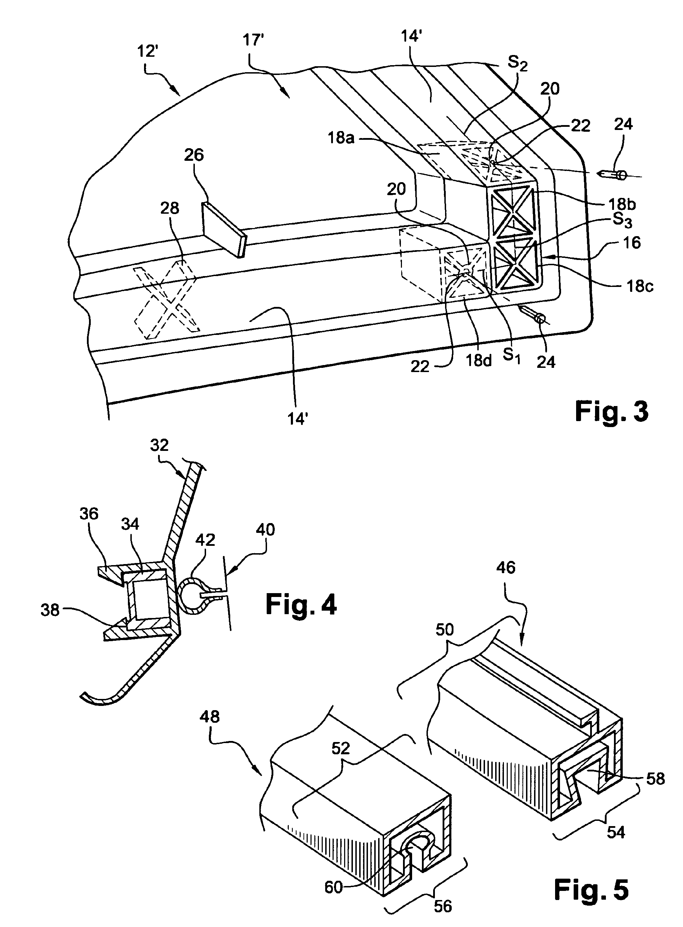

On décrit par la suite la figure 3, représentant un ensemble selon une variante du premier mode de réalisation. Les éléments de ce mode de réalisation correspondant à ceux des figures 1 et 2 sont référencés de façon similaire.

Comme on le voit sur la figure 3, les éléments de connexion tels que l'élément 16' d'un panneau de hayon 12' sont également venus de moulage avec le panneau et constitués par un réseau de nervures. Chaque réseau de nervures est formé d'une pluralité de briques élémentaires 18. Chaque brique comprend quatre nervures s'étendant perpendiculairement à une partie sensiblement plane 17' du panneau 12' et délimitant un pavé dans lequel sont conformées deux nervures croisées s'étendant également perpendiculairement à la partie plane et formant les diagonales de ce parallélépipède. L'élément de connexion 16' représenté sur la figure 3 comprend par exemple quatre briques élémentaires 18a à 18d.

Pour sécuriser la fixation des éléments de renfort, tels que les éléments 14', au panneau 12', ceux-ci sont rivetés sur le panneau 12'. Pour cela, une brique 18a, 18d de l'élément de connexion 16', située à l'extrémité de l'élément de connexion, comprend au centre des deux nervures croisées un conduit de fixation 20, sur lequel est apte à se superposer un orifice 22 de chaque élément de renfort 14', lorsque ce dernier est monté sur le panneau de hayon. Un rivet 24 est ensuite introduit dans le conduit 20 et l'orifice 22 superposés.

Comme on le voit également sur la figure 3, l'élément de connexion 16' s'étend selon plusieurs segments sensiblement rectilignes S₁, S₂, S₃ suivant le contour du cadre. Un premier segment S₁ s'étend dans la continuité de la direction longitudinale d'un premier élément de renfort 14' une fois celui-ci monté sur le panneau, un deuxième segment S₂ s'étend dans la continuité de la direction longitudinale d'un deuxième élément 14' une fois celui-ci monté sur le hayon et un troisième segment S₃ est perpendiculaire au premier segment S₁, reliant celui-ci et le deuxième segment S₂, Les trois segments S₁, S₂, S₃ ne sont pas compris dans un même plan.

D'autres éléments de connexion, tels que l'élément 16g de la figure 2, ne comprennent que deux briques élémentaires, chaque brique élémentaire s'étendant selon un segment suivant le contour du cadre, ces segments n'étant pas parallèles entre eux.

Ainsi, les changements de direction du contour du véhicule et du hayon sont reproduits sur le cadre directement par les éléments de connexion moulés avec le panneau du hayon 12, les éléments de renfort étant de forme très simple.

On voit également sur la figure 3 une nervure 26 ménagée sur le panneau de hayon 12' au voisinage de l'emplacement destiné à accueillir le premier élément de renfort 16'. Le panneau 12' comprend également un croisillon de nervures 28 ménagé sur le panneau pour être disposé à l'intérieur du premier élément de renfort lorsque ce dernier est monté sur le panneau 12'. Ces nervures permettent d'assurer un meilleur positionnement du premier élément de renfort sur le hayon et également d'empêcher le déplacement d'une partie de celui-ci en cas de sollicitation, par exemple en torsion. Ainsi, grâce à des nervures telles que 26, 28, le premier élément de renfort 16' n'est pas seulement maintenu à ses extrémités par les rivets 24 mais peut être maintenu en place essentiellement sur toute sa longueur.

On a représenté sur la figure 4 une vue en coupe d'un ensemble selon un deuxième mode de réalisation de l'invention. Seules les différences avec le premier mode de réalisation sont décrites plus précisément ci-dessous. Les éléments non décrits, tels que les éléments de connexion, sont par exemple identiques à ceux du premier mode de réalisation.

L'ensemble 30 selon ce mode de réalisation comprend un panneau de hayon 32 formant panneau intérieur du hayon. Ce panneau intérieur 32 forme également une garniture visible depuis l'intérieur du véhicule.

Comme cela est décrit précédemment, des profilés en U 34 formant éléments de renfort, dont un est représenté sur la figure 4, sont montés sur le panneau 32 de façon à former un cadre continu, en coopération avec des éléments de connexion (non représentés) moulés avec le panneau 32.

Dans ce mode de réalisation, l'élément de renfort 34 est assemblé sur le panneau 32 par clippage, à l'aide de languettes 36 dans lesquelles est apte à s'emboîter l'élément de renfort 34. Les languettes comprennent un bord lié au panneau et un bord libre et sont conformées pour comprendre une surface de butée 38 empêchant le déboîtement de l'élément de renfort 34.

Des languettes telles que la languette 36 sont réparties le long de l'emplacement du panneau destiné à accueillir l'élément de renfort 34, de sorte que ce dernier est convenablement maintenu sur toute sa longueur. Ces languettes 36 sont distinctes de l'élément de connexion. Elles permettent de former également des moyens de positionnement et de maintien de l'élément de renfort en position, de sorte qu'il n'est pas nécessaire de prévoir sur le panneau 32 des éléments supplémentaires pour remplir cette fonction, telles que les nervures 26, 28 représentées sur la figure 3.

On distingue également sur la figure 4 une caisse en blanc 40 du véhicule automobile, notamment un joint d'étanchéité 42, destiné à assurer, en coopération avec le panneau 32 du hayon, l'étanchéité entre l'intérieur et l'extérieur du véhicule.

On remarque que le panneau 32 change d'inclinaison en face du joint d'étanchéité, pour assurer une meilleure coopération avec le joint. Les languettes 36 sont ménagées au niveau des changements d'inclinaison du panneau, créés du fait de la présence de la zone d'étanchéité. Ainsi, cela permet d'améliorer l'état de surface du panneau formant garniture, car les retassures dues à la présence des languettes 36 sont masquées par les changements de direction du panneau 32.

L'invention n'est pas limitée au mode de réalisation représenté ci-dessus.

Les éléments de renfort peuvent être assemblés au panneau par d'autres moyens que ceux représentés, par exemple par vissage, bouterollage ou collage.

Le panneau peut également être lié aux éléments de renfort par surmoulage. Dans ce cas, les éléments de renforts sont positionnés dans le moule destiné à former le panneau de hayon et la matière plastique destinée à former ce panneau est moulée sur les éléments de renfort.

Dans ce cas, comme cela est représenté sur la figure 5, les éléments de renfort 46, 48 sont de préférence des profilés à section fermée comprenant une forme externe 50, 52 destinée à être en contact avec une paroi du moule, de conception simple, formant par exemple un U, et une forme interne 54, 56, destinée à être en contact avec le panneau de lorsque celui-ci est surmoulé sur les profilés. Cette forme interne 54, 56 est de concavité tournée vers le panneau lorsque celui-ci est surmoulé sur les profilés et est relativement complexe. Elle comprend notamment un dégagement 58, 60 de largeur réduite au niveau de son embouchure et permettant de garantir une bonne accroche mécanique de la matière plastique sur les profilés. De tels profilés peuvent être utilisés dans d'autres cas que le surmoulage.

Pour garantir encore une meilleure accroche de la matière plastique sur les éléments de renfort, il est possible de prévoir un moule conformé pour que des lamelles ou des ponts, entourant au moins une partie les éléments de renfort, soient ménagés sur le panneau de hayon.

En outre, les éléments de connexion peuvent être conformés différemment de ce qui a été représenté plus haut. Ils ne sont pas non plus forcément positionnés sur le hayon comme cela a été représenté Par exemple, ils peuvent former une poutre horizontale intégrée au panneau. Les éléments de connexion peuvent également être conformés pour porter des éléments fonctionnels du véhicule, tels qu'une serrure.

La forme des éléments de renfort n'est pas non plus limitée à celles décrites.

Un unique cadre peut également être formé dans le hayon. Le ou les cadres peuvent également être de forme différente de celle décrite.

Les éléments de renfort peuvent être disposés en dehors de la zone d'étanchéité ou en dehors de la bordure du panneau intérieur de hayon.

En outre, les éléments de renfort peuvent s'étendre selon plusieurs segments sensiblement rectilignes suivant le contour du cadre, tous contenus dans un même plan. Dans ce cas, une opération de cintrage également relativement simple sera nécessaire pour conformer le profilé, de sorte que celui-ci est galbé au maximum dans deux directions.

Les matériaux des différents éléments ne sont pas non plus limités à ceux décrits.

L'ensemble peut appartenir à un hayon de tout type, par exemple un hayon comprenant un ouvrant pivotant selon un axe de rotation horizontal ou vertical ou deux portes. Le hayon peut également être un hayon sensiblement plan.

Le panneau de l'ensemble peut également être apte à former un panneau d'un autre type d'ouvrant qu'un hayon, par exemple un capot, une porte de coffre ou une portière de véhicule automobile.

## Revendications

1. Ensemble (10) d'un panneau d'ouvrant de véhicule automobile (12 ; 12' ; 32) et d'au moins deux éléments de renfort (14a-14k ; 14' ; 34 ; 46 ; 48), chaque élément de renfort (14a-14k) ayant une forme allongée et deux extrémités, ledit ensemble comprenant au moins deux éléments de connexion (16a-16j ; 16'), chaque élément de renfort étant apte à être lié au panneau, de sorte que chaque extrémité des éléments de renfort est au moins partiellement superposée à l'un des éléments de connexion, les éléments de renforts et les éléments de connexion formant au moins un cadre continu lorsque les éléments de renfort sont liés au panneau, ledit ensemble étant **caractérisé en ce que** le panneau est réalisé en matière plastique et **en ce que** les éléments de connexion sont venus de moulage avec le panneau (12 ; 12').

2. Ensemble selon la revendication précédente, dans lequel le ou les cadres continus formés à l'aide des éléments de connexion (16a-16j ; 16') et de renfort (14a-14k ; 14' ; 34 ; 46 ; 48) sont les seuls cadres rigides de l'ouvrant.

3. Ensemble selon l'une quelconque des revendications précédentes, dans lequel au moins un des éléments de renfort s'étend le long d'au moins deux segments sensiblement rectilignes formant partiellement le contour d'au moins un des cadres lorsque les éléments de renfort sont liés au panneau, tous les segments étant compris dans un unique plan.

4. Ensemble selon l'une quelconque des revendications précédentes, dans lequel au moins un des éléments de renfort est formé par un profilé à section constante (14a-14k ; 14' ; 34 ; 46 ; 48), notamment un profilé à section ouverte (14a-14k ; 14' ; 34) dont la concavité est tournée vers le panneau.

5. Ensemble selon l'une quelconque des revendications précédentes, dans lequel au moins un des éléments de connexion (16a-16j) s'étend le long d'au moins deux segments sensiblement rectilignes (S₁, S₂, S₃) formant chacun partiellement le contour d'au moins un des cadres lorsque les éléments de renfort sont liés au panneau, les segments n'étant pas parallèles entre eux.

6. Ensemble selon la revendication précédente, dans lequel l'élément de connexion s'étend le long d'au moins trois segments (S₁, S₂, S₃) n'appartenant pas à un unique plan.

7. Ensemble selon la revendication précédente, dans lequel au moins un élément de connexion est formé par un réseau de nervure (18a- 18d).

8. Ensemble selon l'une quelconque des revendications précédentes, dans lequel le panneau (12 ; 12' ; 32) est réalisé en un matériau thermoplastique tel que le polypropylène, éventuellement chargé ou renforcé de fibres.

9. Ensemble selon l'une quelconque des revendications précédentes, dans lequel au moins un élément de renfort (46 ; 48) est apte à être lié au panneau par surmoulage.

10. Ensemble selon l'une quelconque des revendications 1 à 8, dans lequel au moins un élément de renfort (14a-14k ; 14' ; 34) est rapporté sur le panneau et est apte à être lié à ce panneau de sorte que chaque extrémité des éléments de renfort est emboîtée sur l'un des éléments de connexion (16a-16j ;16').

11. Ensemble selon l'une des revendications précédentes, dans lequel le panneau comprend au moins une butée (26, 28) agencée pour coopérer avec un élément de renfort (14').

12. Ensemble selon l'une quelconque des revendications précédentes, dans lequel au moins un élément de connexion du panneau est apte à porter un élément fonctionnel de l'ouvrant, tel qu'une serrure.

13. Ensemble selon l'une quelconque des revendications précédentes, dans lequel le panneau est apte à former un panneau de hayon, de porte de coffre, de portière ou de capot de véhicule automobile.

## Claims

1. Assembly (10) of a motor vehicle opening panel (12; 12'; 32) and at least two reinforcing elements (14a-14k; 14'; 34; 46; 48), each reinforcing element (14a-14k) having an elongate shape and two ends, said assembly comprising at least two connecting elements (16a-16j; 16'), each reinforcing element being connectable to the panel in such a way that each end of the reinforcing elements is at least partially superimposed on one of the connecting elements, the reinforcing elements and the connecting elements forming at least one continuous frame when the reinforcing elements and the panel are connected, said assembly being **characterized in that** the panel is made of plastic material and **in that** the connecting elements are molded with the panel (12; 12').

2. Assembly according to the preceding claim, wherein the continuous frame(s) formed using the connecting (16a-16j; 16') and reinforcing (14a-14k; 14'; 34; 46; 48) elements are the only rigid frames of the opening.

3. Assembly according to any of the preceding claims, wherein at least one of the reinforcing elements extends along at least two substantially straight segments partially forming the contour of at least one of the frames when the reinforcing elements are connected to the panel, all the segments lying in the same plane.

4. Assembly according to any of the preceding claims, wherein at least one of the reinforcing elements is formed by a profile of constant cross-section (14a-14k; 14'; 34; 46; 48), in particular a profile of open cross-section (14a-14k; 14'; 34) whose concavity is oriented towards the panel.

5. Assembly according to any of the preceding claims, wherein at least one of the connecting elements (16a-16j) extends along at least two substantially straight segments (S₁, S₂, S₃) each partially forming the contour of at least one of the frames when the reinforcing elements are connected to the panel, the segments not being parallel to each other.

6. Assembly according to the preceding claim, wherein the connecting element extends along at least three segments (S₁, S₂, S₃) not lying in the same plane.

7. Assembly according to the preceding claim, wherein at least one connecting element is formed by a network of ribs (18a-18d).

8. Assembly according to any of the preceding claims, wherein the panel (12; 12'; 32) is made from a thermoplastic material such as polypropylene, possibly loaded or reinforced with fibres.

9. Assembly according to any of the preceding claims, wherein at least one reinforcing element (46; 48) can be connected to the panel by overmoulding.

10. Assembly according to any of claims1 to 11, wherein at least one reinforcing element (14a-14k; 14'; 34) is fastened to the panel and can be connected to this panel such that each end of the reinforcing elements is inserted in one of the connecting elements (16a-16j; 16').

11. Assembly according to any of the preceding claims, wherein the panel comprises at least one stop (26, 28) designed to cooperate with a reinforcing element (14').

12. Assembly according to any of the preceding claims, wherein at least one connecting element of the panel can take a functional element of the opening, such as a lock.

13. Assembly according to any of the preceding claims, wherein the panel can form a motor vehicle hatch, boot door, side door or bonnet panel.

## Patentansprüche

1. Anordnung (10) einer Öffnungsplatte (12; 12'; 32) eines Kraftfahrzeugs und von mindestens zwei Verstärkungselementen (14a-14k; 14'; 34; 46; 48), wobei jedes Verstärkungselement (14a-14k) eine längliche Form und zwei Enden hat, wobei die Anordnung mindestens zwei Verbindungselemente (16a-16j; 16') aufweist, wobei jedes Verstärkungselement mit der Platte derart verbunden werden kann, dass jedes Ende der Verstärkungselemente mindestens teilweise mit einem der Verbindungselemente überlagert ist, wobei die Verstärkungselemente und die Verbindungselemente mindestens einen durchgehenden Rahmen bilden, wenn die Verstärkungselemente mit der Platte verbunden sind, wobei die Anordnung **dadurch gekennzeichnet ist, dass** die Platte aus Kunststoff hergestellt ist, und dass die Verbindungselemente aus einem Teil mit der Platte (12; 12') geformt sind.

2. Anordnung nach dem vorhergehenden Anspruch, bei der der oder die durchgehenden Rahmen, die mit Hilfe der Verbindungselemente (16a-16j; 16') und Verstärkungselemente (14a-14k; 14'; 34; 46; 48) gebildet sind, die einzigen starren Rahmen der Öffnungsplatte sind.

3. Anordnung nach einem der vorhergehenden Ansprüche, bei der sich mindestens eines der Verbindungselemente entlang von mindestens zwei im Wesentlichen geradlinigen Segmenten erstreckt, die teilweise die Kontur mindestens eines der Rahmen bilden, wenn die Verstärkungselemente mit der Platte verbunden sind, wobei alle Segmente in einer einzigen Ebene enthalten sind.

4. Anordnung nach einem der vorhergehenden Ansprüche, bei der mindestens eines der Verstärkungselemente aus einem Profil mit konstantem Querschnitt (14a-14k; 14'; 34; 46; 48) ausgebildet ist, insbesondere aus einem Profil mit offenem Querschnitt (14a-14k; 14'; 34), dessen Konkavität zu der Platte gerichtet ist.

5. Anordnung nach einem der vorhergehenden Ansprüche, bei der sich mindestens eines der Verbindungselemente (16a-16j) entlang von mindestens zwei im Wesentlichen geradlinigen Segmenten (S₁, S₂, S₃) erstreckt, die jeweils teilweise die Kontur mindestens eines der Rahmen bilden, wenn die Verstärkungselemente mit der Platte verbunden sind, wobei die Segmente untereinander nicht parallel sind.

6. Anordnung nach dem vorhergehenden Anspruch, bei der sich das Verbindungselement entlang von mindestens drei Segmenten (S₁, S₂, S₃), die nicht zu einer einzigen Ebene gehören, erstreckt.

7. Anordnung nach dem vorhergehenden Anspruch, bei der mindestens ein Verbindungselement aus einem Rippennetz (18a-18 d) ausgebildet ist.

8. Anordnung nach einem der vorhergehenden Ansprüche, bei der die Platte (12; 12'; 32) mit einem Thermoplastmaterial, wie zum Beispiel Polypropylen, eventuell mit Fasern gefüllt oder verstärkt, hergestellt ist.

9. Anordnung nach einem der vorhergehenden Ansprüche, bei der mindestens ein Verstärkungselement (46; 48) mit der Platte durch Abformen verbunden werden kann.

10. Anordnung nach einem der Ansprüche 1 bis 8, bei der mindestens ein Verstärkungselement (14a-14k; 14'; 34) an die Platte angebaut ist und mit dieser Platte derart verbunden werden kann, dass jedes Ende der Verstärkungselemente an einem der Verbindungselemente (16a-16j; 16') eingerastet wird.

11. Anordnung nach einem der vorhergehenden Ansprüche, bei der die Platte mindestens einen Anschlag (26, 28) aufweist, der eingerichtet ist, um mit einem Verstärkungselement (14') zusammenzuwirken.

12. Anordnung nach einem der vorhergehenden Ansprüche, bei der mindestens ein Verbindungselement der Platte ein funktionales Element der Öffnungsplatte, wie zum Beispiel ein Schloss, tragen kann.

13. Anordnung nach einem der vorhergehenden Ansprüche, bei der die Platte eine Heckklappe, einen Kofferraumdeckel, eine Türplatte oder Motorhaubenplatte eines Kraftfahrzeugs bilden kann.
